(19) Europäisches Patentamt
European Patent Office
Office européen des brevets

(11) **EP 3 139 483 A1**

(12) **EUROPEAN PATENT APPLICATION**

(43) Date of publication:
**08.03.2017 Bulletin 2017/10**

(51) Int Cl.:
*H02M 3/156* (2006.01)          *H05B 33/08* (2006.01)
*H02M 1/00* (2007.01)

(21) Application number: **16178841.9**

(22) Date of filing: **11.07.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.07.2015 IT UB20152206**

(71) Applicants:
• **OSRAM GmbH**
**80807 München (DE)**
• **Osram S.p.A. - Societa' Riunite Osram Edison Clerici**
**20126 Milano (IT)**
Designated Contracting States:
**IT**

(72) Inventors:
• **DE ANNA, Paolo**
**I-31039 Vallà di Riese Pio X (Treviso) (IT)**
• **ANGELIN, Francesco**
**I-31021 Mogliano Veneto (Treviso) (IT)**

(74) Representative: **Meindl, Tassilo**
**Buzzi, Notaro & Antonielli d'Oulx S.r.l.**
**Via Maria Vittoria, 18**
**10123 Torino (IT)**

(54) **ELECTRONIC REVERSE BUCK CONVERTER, AND CORRESPONDING METHOD OF OPERATING AN ELECTRONIC REVERSE BUCK CONVERTER**

(57)     There is disclosed an electronic reverse buck converter (12a). The converter comprises two input terminals (110) for receiving a first power supply signal ($V_{in}$) and two output terminals (106) for providing a second power supply signal *(io, $V_o$)*. A diode (D) and an electronic switch (S) are connected in series between said two input terminals (110), wherein the cathode of diode (D) is connected to the first input terminal and switch (S) is connected between the second input terminal and the anode of the diode, wherein the second input terminal represents a first ground (GNDA). An inductor (L) and both output terminals (106) are connected in series between the cathode and the anode of diode (D), wherein the first output terminal is connected to the cathode of diode (D) and inductor (L) is connected to the anode of diode (D), wherein the second output terminal represents a second ground (GNDB).

Specifically, electronic converter (12a) further comprises a control circuit (112a) and a shunt resistor ($R_S$) connected between the second output terminal and inductor (L), wherein the voltage across shunt resistor ($R_S$) is indicative of the current provided via both output terminals (106).

Control circuit (112a) comprises an error amplifier, a voltage conversion circuit and a driver circuit. The error amplifier generates a first error signal as a function of the voltage across said shunt resistor ($R_S$) and a reference signal indicative of a requested current, wherein the first error signal is referred to second ground (GNDB). The voltage conversion circuit receives the first error signal and generates a second error signal, wherein the second error signal is referred to first ground (GNDA). The driver circuit drives the switching of electronic switch (S) as a function of the second error signal.

Fig. 6

**Description**

Field of the Invention

The description relates to electronic converters.
This disclosure was devised with specific attention paid to the improvement of the driving of an electronic reverse buck (or inverse buck) converter.

Description of the Related Art

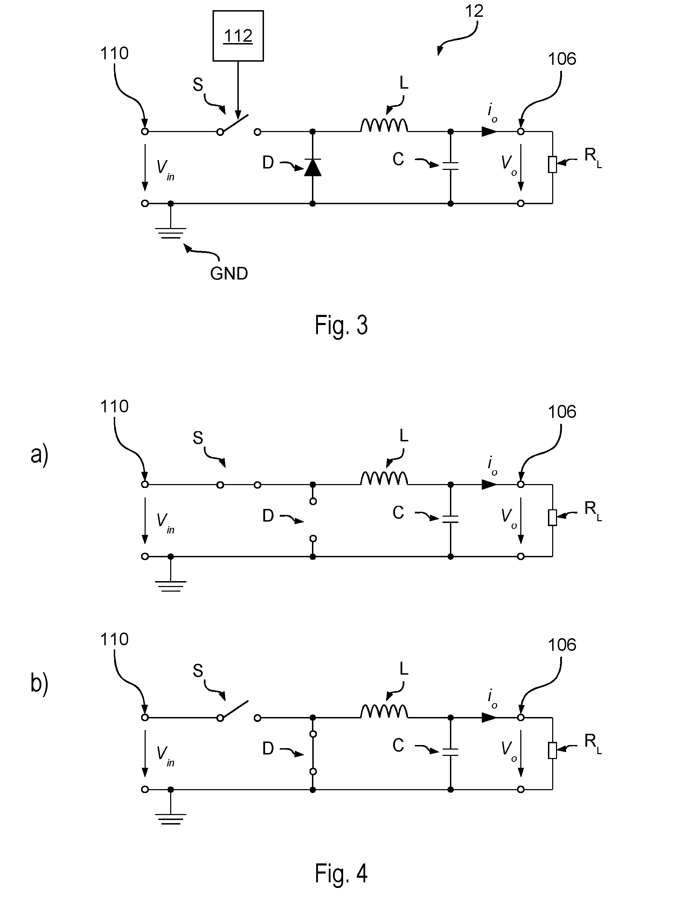

Electronic converters for light sources, comprising e.g. at least one LED (Light Emitting Diode) or other solid-state lighting means, may offer a direct current output. Such current may be steady or vary in time, e.g. in order to adjust the brightness emitted by the light source (so-called dimming function).

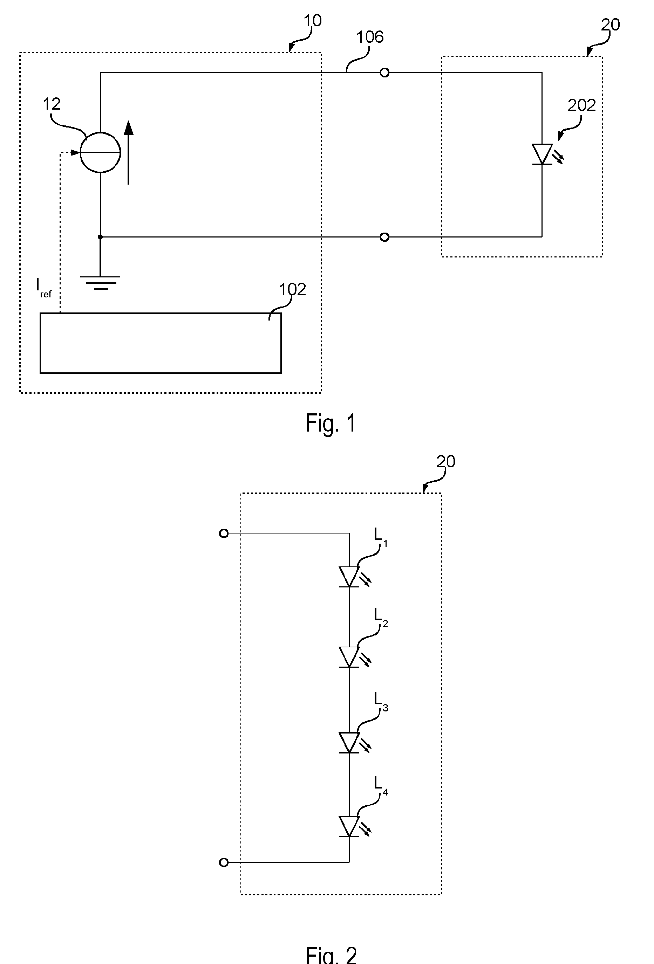

Figure 1 shows a possible lighting arrangement comprising an electronic converter 10 and a lighting module 20 including, for instance, at least one LED 202.
For instance, Figure 2 shows an example of a lighting module 20 comprising, e.g., a LED chain, i.e. a plurality of LEDs connected in series. As an example, Figure 2 shows four LEDs $L_1$, $L_2$, $L_3$ e $L_4$.
Electronic converter 10 often comprises a control circuit 102 and a power circuit 12 (e.g. an AC/DC or DC/DC switching supply) which receives at an input a supply signal (e.g. from the mains) and provides at an output, through a power output 106, a direct current. Such a current may be steady or vary in time. For example, control circuit 102 may set, via a reference channel $I_{ref}$ of power circuit 12, the current requested by LED module 20.
For example, such a reference channel $I_{ref}$ may be used in order to adjust the brightness of the light emitted by lighting module 20. Actually, in general terms, a regulation of the light brightness emitted by LED module 20 may be achieved by regulating the average current flowing through the lighting module, for example by setting a lower reference current $I_{ref}$ or by switching on or off power circuit 12 through a Pulse Width Modulation (PWM) signal, typically at a low frequency, e.g. between 50 and 500 Hz.
In general there are known many types of electronic converters, which are mainly divided into insulated and non-insulated converters. For example, among the non-insulated electronic converters we may name "*buck*", "*boost*", "*buck-boost*", "*Cuk*", "*SEPIC*" and *"ZETA"* converters. Insulated converters are e.g. *"flyback"*, *"forward"*, *"Half-bridge"* and *"Full-bridge"* converters. Such converter arrangements are well known to the person skilled in the art.
For example, Figure 3 shows a circuit diagram of a buck converter operating as a DC/DC converter. The person skilled in the art will appreciate that an input alternated current (AC) may be converted into a direct current (DC) via a rectifier, e.g. a diode-bridge rectifier, and optionally a filter capacitor. Generally speaking, a further DC/DC converter might be provided between the rectifier and the filter capacitor, e.g. a PFC (Power Factor Correction) converter which further stabilizes the voltage at the filter capacitor and/or improves the power factor.
Substantially, a buck converter comprises an electronic switch S, a diode D, an inductor L and often a capacitor C.
In the presently considered example, converter 12 receives at input, via two input terminals 110, a voltage $V_{in}$ and provides at output, via two output terminals 106, a regulated voltage $V_o$ or a regulated current $i_o$.
Specifically, the first terminal (positive terminal) of input 110 is connected, via switch S, to a first terminal of inductor L, and the second terminal (negative terminal) of input 110 represents a ground GND. On the other hand, the second terminal of inductor L is connected to the first terminal (positive terminal) of output 106, and the second terminal (negative terminal) of output 106 is connected to ground GND. In the presently considered example, the cathode of diode D, which may generally be implemented also as a second switch, is connected at the middle point between switch S and inductor L, and the anode of diode D is connected to ground GND. Finally, capacitor C is connected in parallel with output 106, i.e. directly to output terminals 106. Generally speaking, such a capacitor C may be omitted in the case of a current control.
In the presently considered example, a load $R_L$ is connected to said output 106, and it may consist of the previously described lighting module 20.
As previously stated, the control may be a voltage or a current control. To this purpose, a control unit 112 is typically provided which drives switch S so that output voltage $V_o$ or output current $i_o$ is set to a desired value, e.g. reference current $I_{ref}$. To this purpose, in a way known in itself, a sensor may be provided which is adapted to detect current $i_o$ or voltage $V_o$.
Referring to Figures 4a and 4b a possible driving of such a buck converter will be described.
Specifically, as shown in Figure 4a, in a first operating period switch S is closed and diode D is off, i.e. diode D has a reverse bias. In this case, inductor L saves the energy received from input 110. In this condition, the current flowing through inductor L has a substantially linear increase, while no current flows through diode D.
On the contrary, as shown in Figure 4b, during a second operating period, switch S is open and diode D is on. As a matter of fact, diode D has a direct bias, because the voltage bias across inductor L is reversed. In this condition, the current flowing through inductor L experiences a substantially linear decrease.
Typically, both previously described operating periods are periodically repeated with a fixed frequency, wherein energy transfer is controlled via a PWM signal; in other words, the duration of the first and of the second period varies, while the sum of the durations is constant.
The person skilled in the art will appreciate that such a PWM driving and the control of the duration of operating periods are well known and may be implemented, e.g., via a feedback of the output voltage or current through an error amplifier. For example, in the case of current control, the duration of the first period is increased until the (average) output current reaches a predetermined threshold.

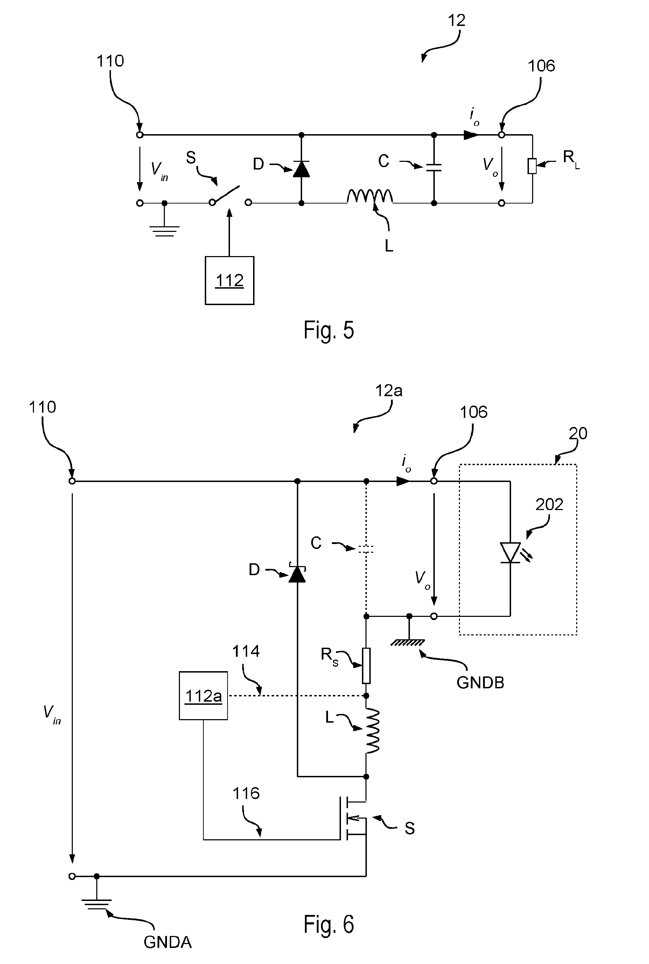

Figure 5 shows an alternative embodiment of a buck converter, wherein the arrangement of switch S and of inductor L is different. Typically, this topology is named reverse buck (or inverse buck) converter.

In the presently considered example, the first terminal of input 110 is directly connected to the first output terminal. On the other hand, the second terminal of input 110, which represents ground GND, is connected through switch S to a first terminal of inductor L. Moreover, the second terminal of inductor L is connected to the second output terminal 106.

In the presently considered example, the anode of diode D, which also in this topology may be implemented as a second switch, is connected at the middle point between switch S and inductor L, and the cathode of diode D is connected to the first terminal of input 110 or to the first terminal of output 106.

Finally, a capacitor C may be connected in parallel with output 106, i.e. directly to output terminals 106.

Therefore, in the presently considered example switch S is no longer connected to the positive input terminal, but to the negative terminal. As a consequence, switch S is now a *"low-side"* switch and may be implemented, e.g., as an N-MOS transistor.

Moreover, the position of inductor L has changed, because it is sufficient to have inductor L connected in series with output 106.

Thus, the general operating principle is substantially unvaried.

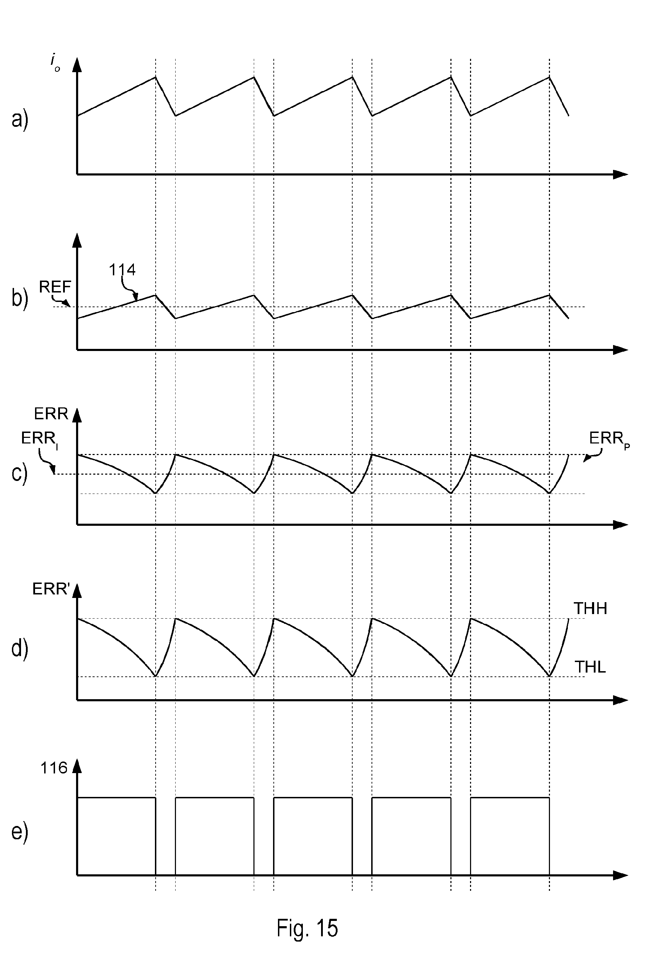

For example, the paper *"NCL30100 - Fixed Off Time Switched Mode LED Driver Controller"*, Semiconductor Components Industries, LLC, 2011, the content whereof is included herein as a reference, describes a control circuit for a reverse buck converter, which is used for driving at least one LED. Specifically, this paper proposes using the *"negative current sensing"* technology (see for instance Figure 15 of the paper) in order to measure, via a shunt resistor $R_{CS}$, the current flowing through the LEDs. Specifically, said shunt resistor $R_{CS}$ is connected between the second output terminal and switch S, and may therefore only indicate the current traversing switch S, and not necessarily the current which actually flows through the LEDs.

Object and Summary

The object of the invention is to overcome the previously outlined drawbacks.

According to the invention, said object is achieved thanks to an electronic reverse buck converter having the features set forth in the claims that follow. The claims refer moreover to a corresponding method of operating an electronic reverse buck converter.

The claims are an integral part of the technical teaching provided herein with reference to the present description.

As previously stated, the present description refers to embodiments of electronic reverse buck converters.

In various embodiments, the converter comprises two input terminals, which receive a first supply signal, and two output terminals which provide a second supply signal, wherein the second input terminal represents a first ground and the second output terminal represents a second ground. The converter comprises moreover a diode and an electronic switch, which are connected in series between the input terminals, wherein the cathode of the diode is connected to the first input terminal and the switch is connected between the second input terminal and the anode of the diode.

In various embodiments, the converter also comprises an inductor, wherein the inductor and both output terminals are connected in series between the cathode and the anode of the diode. For example, the first output terminal may be connected to the cathode of the diode, and the inductor may be connected to the anode of the diode.

In various embodiments, the electronic converter also comprises a shunt resistor and a control circuit.

In various embodiments, the shunt resistor is connected between the second output terminal and the inductor, so that the voltage across the shunt resistor is indicative of the current being provided through output terminals (106).

In various embodiments, the control circuit comprises an error amplifier, adapted to generate a first error signal as a function of the voltage across the shunt resistor, and an identified reference signal of a requested current.

Specifically, in various embodiments, the first error signal is referred to the second ground, i.e. the output ground. Therefore, in various embodiments, the control circuit comprises a voltage conversion circuit (level shifter), adapted to receive the first error signal and to generate a second error signal indicating the value of the first error signal, wherein the second error signal is referred to the first, i.e. the input ground.

In various embodiments, the control circuit comprises a driver circuit, adapted to drive the switching of the electronic switch as a function of the second error signal.

For example, in various embodiments the error signal is a binary signal, wherein the error amplifier is adapted to set the error signal to a first logic value when the current being provided through the output terminals should be increased, and to set the error signal to a second logic value when the current should be decreased. For example, such an error amplifier may be implemented as a comparator or as a comparator with hysteresis.

On the other hand, in other embodiments, the error amplifier is a regulator comprising a P (proportional) portion, so that the error signal comprises a ripple which is proportional to the difference between the requested current and the current being provided through the output terminals. In this case, the driver circuit may be implemented directly as a comparator with hysteresis.

In various embodiments, in order to improve the accuracy of the control-loop regulator, the error amplifier preferably comprises an I (integral) portion, so that the average value of the error signal either increases or decreases until the current being provided through the output terminals matches in average the requested current.

This arrangement with a PI (or PID) regulator and a comparator with hysteresis offers the advantage that the voltage conversion circuit may be implemented easily. However, generally speaking, other driver circuits may be used as well.

For example, in various embodiments, the voltage conversion circuit comprises a current generator, generating a current as a function of the first error signal, and a voltage generator generating the second error signal as a function of such current.

In various embodiments, the reference signal is provided by a detection circuit, which receives information identifying the requested current through a communication line.

Brief Description of the Annexed Views

Various embodiments will now be described, by way of non-limiting example only, with reference to the annexed views, wherein:

- Figures 1 to 5 have already been described in the foregoing,
- Figure 6 shows a first embodiment of an electronic reverse buck converter according to the present description;
- Figure 7 shows an embodiment of a control circuit for the converter of Figure 7;
- Figure 8 shows a second embodiment of the electronic reverse buck converter according to the present description;
- Figure 9 shows an embodiment of a control circuit for the converter of Figure 8; and
- Figures 10 to 17 show details of the control circuits of Figures 7 and 9.

Detailed Description of Embodiments

In the following description, numerous specific details are given to provide a thorough understanding of the embodiments. The embodiments can be practiced without one or more of the specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the extent of protection or meaning of the embodiments.

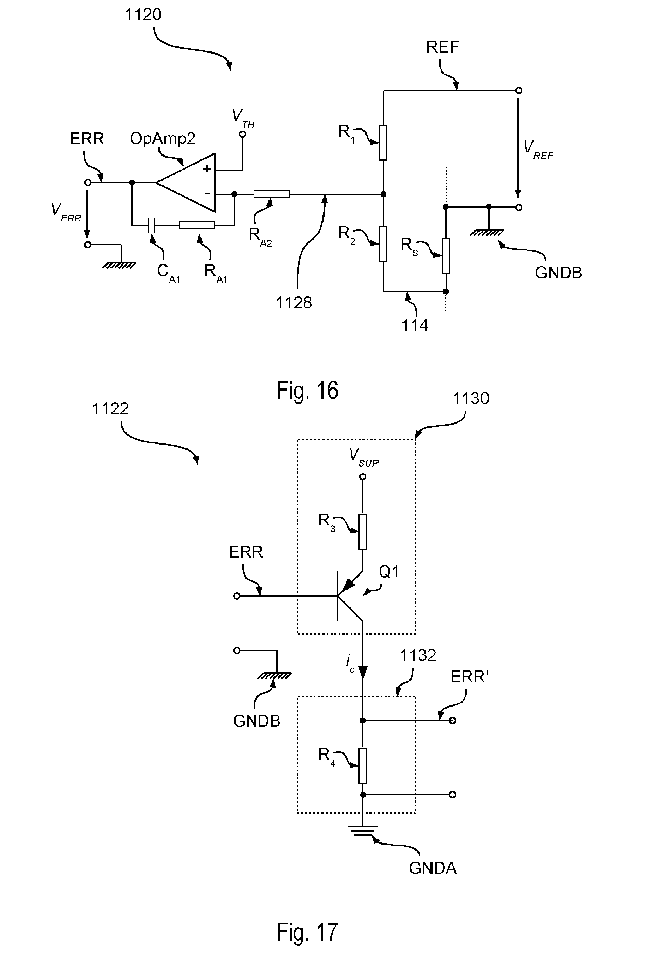

In the following Figures 6 and 17, the parts, elements or components which have already been described with reference to Figures 1 to 5 are denoted with the same references previously used in such Figures; the description of such previously described elements will not be repeated, so as not to overburden the present detailed description.

Figure 6 shows an embodiment of a reverse buck converter 12a according to the present description.

Generally, as described in the introductory section, such a reverse buck converter may be used to supply power to a lighting module 20 comprising one or more LEDs 202.

The general structure of converter 12a corresponds to the structure shown with reference to Figure 5. Therefore, also the converter according to the present description comprises an electronic switch S, a diode D, an inductor L, optionally a capacitor C and a control unit 112a, wherein converter 12a receives as input, through two input terminals 110, a DC voltage $V_{in}$ and provides as output, through two output terminals 106, a regulated voltage $V_o$ or preferably a regulated current $i_o$.

Specifically, in the presently considered embodiment, the first terminal (positive terminal) of input 110 is connected (e.g. directly) to the cathode of diode D, and the second terminal (negative terminal) of input 110, representing a first ground GNDA, is connected through switch S to the anode of diode D. Therefore, in the presently considered embodiment, switch S is connected to ground GNDA and may be implemented as an N-MOS transistor.

In the presently considered embodiment, diode D is a Schottky diode. However, in general, diode D may be implemented as another type of diode or as a second electronic switch driven by control unit 112, so that this switch and switch S are closed alternatively (see for example Figures 4a and 4b).

In the presently considered embodiment, between the cathode and the anode of diode D there are connected the terminals of output 106, inductor L and a shunt resistor $R_S$. Generally speaking, it is sufficient for the terminals of output 106, inductor L and shunt resistor $R_S$ to be connected in series between the cathode and the anode of diode D.

For example, in the presently considered embodiment, the first terminal (positive terminal) of output 106 is connected (e.g. directly) to the cathode of diode D, the second terminal (negative terminal) of output 106 is connected (e.g. directly) to the cathode of diode D.

In the presently considered embodiment, between output terminals 106 there are connected one or more lighting modules 20, comprising one or more LEDs 202 connected in series and/or in parallel, i.e. one or more LEDs are connected between output terminals 106.

Therefore, in general, the voltage across resistor $R_S$ corresponds to a signal 114 which is proportional to the current flowing through lighting module(s) 20; in other words, signal 114 is indicative of the current flowing through LEDs 202.

The arrangement described with reference to Figure 6 offers the advantage that the voltage at the second output terminal, representing a second ground GNDB, has a substantially constant voltage in comparison with the first ground GNDA. Indeed, voltage $V_o$ between output terminals 106 substantially corresponds to the sum of the voltages across the LEDs, i.e. of the forward voltages of LEDs 202. Therefore, the voltage at the second output terminal with reference to ground GNDA substantially corresponds to:

$$V_{in} - V_o.$$

In the presently considered embodiment, control circuit 112a is adapted to detect the current flowing through LEDs 202 (in other words, control circuit 112a receives signal 114), and to drive switch S, e.g. an N-MOS transistor, as a function of the detected current; i.e., control circuit 112a provides a drive signal 116 connected to the control terminal of electronic switch S, e.g. to the gate of an N-MOS transistor.

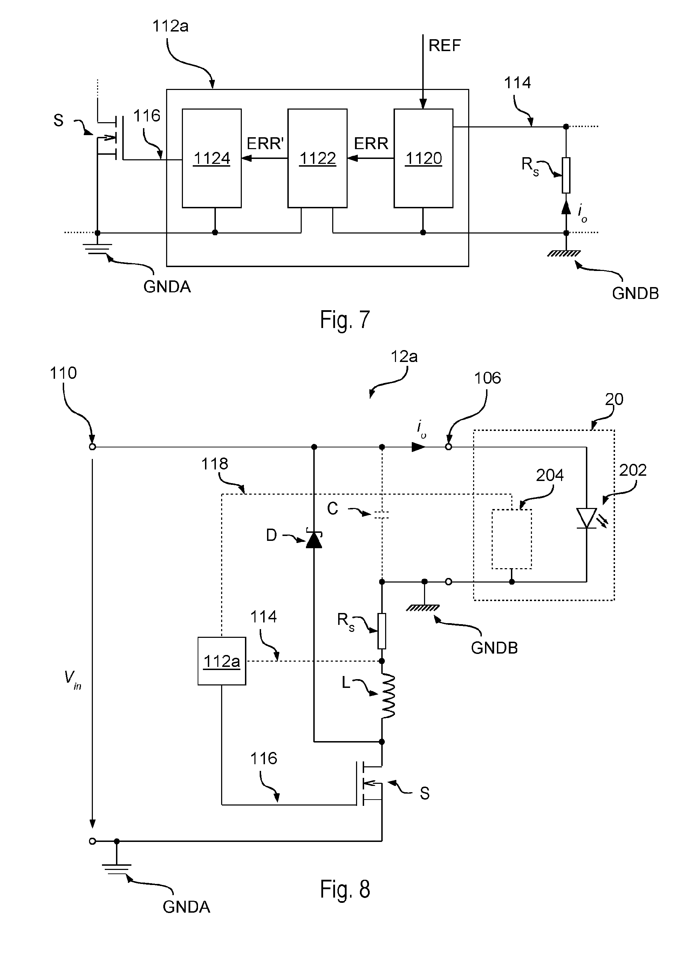

For example, Figure 7 shows a possible embodiment of control circuit 112a.

In the presently considered embodiment, control circuit 112a comprises a regulator 1120, adapted to compare the current traversing LEDs 202 with a reference value REF, e.g. signal $I_{Ref}$ described with reference to Figure 1. Regulator 1120 may be for example a P (proportional) controller, a PI (proportional-integral) controller or a PID (proportional-integral-derivative) controller, and it is normally known as an error amplifier.

Generally speaking, regulator 1120 is adapted to generate an error signal ERR as a function of a signal 114 identified by current $i_o$ flowing through LEDs 202 and a reference value REF.

In an embodiment, error signal ERR is sent to a driver circuit 1124, which controls the switching of switch S as a function of error signal ERR.

In an embodiment, regulator 1120 operates with ground GNDB, while driver circuit 1124 operates with ground GNDA, i.e. error signal ERR is referred to ground GNDB and drive signal 116 is referred to ground GNDA.

Therefore, in an embodiment, control circuit 112a comprises a voltage conversion circuit (level shifter) 1122, which converts error signal ERR into a corresponding error signal ERR' referred to ground GNDA, i.e. voltage conversion circuit 1122 receives as input the error signal ERR referred to ground GNDB and provides as output the error signal ERR' referred to mass GNDB.

Figure 8 shows a second embodiment, wherein reference signal REF is determined as a function of an ID element 204 provided in lighting module 20.

For example, such an ID element 204 may identify the current requested by lighting module 20 (or in general control parameters). Therefore, generally speaking, control circuit 112a is adapted to communicate with ID element 204, and it adapts the operation of the electronic converter to the operating conditions requested by the LED module.

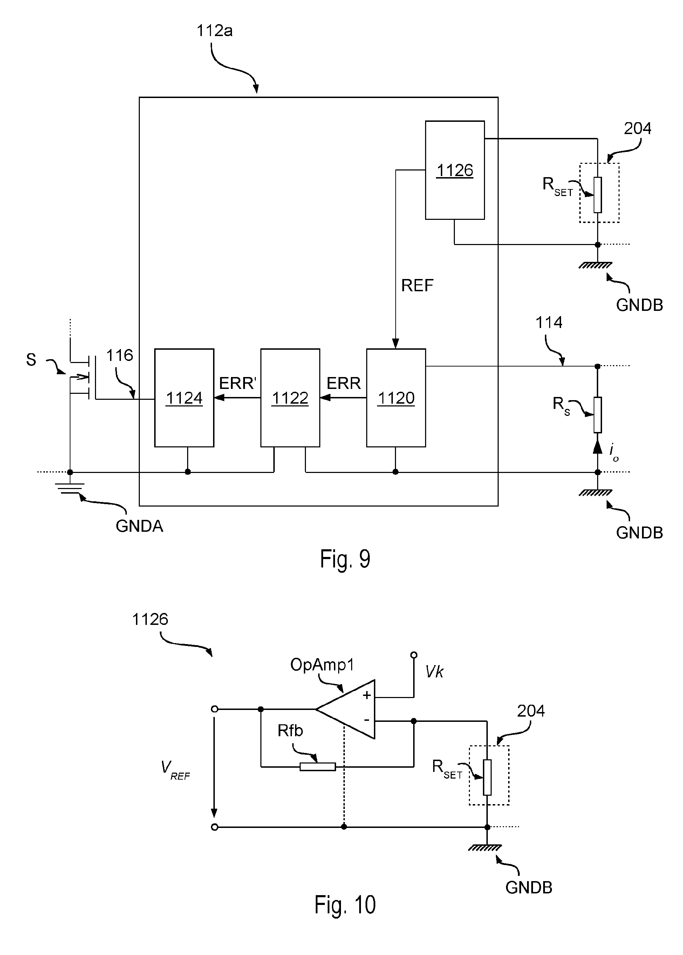

To this purpose, for example, as shown in Figure 9, control circuit 112a may comprise a detection circuit 1126, adapted to communicate with ID element 204 through a communication line 118 (and ground GNDB).

Generally speaking, the communication between circuit 1126 and element 204 may be based on a digital communication protocol, such as a communication with the I²C (Inter Integrated Circuit) protocol or another "single wire" or analogue communication protocol.

For example, in the simplest of cases, ID element 204 may be a resistor $R_{SET}$ (or another impedance element) connected between line 118 and the second output terminal (e.g. ground GNDB), wherein the impedance value indicates the value of the control parameter, e.g. the requested current. In general, another resistive element may be used, and/or the resistance may be variable.

For example, for the case wherein the ID element comprises a resistive element, e.g. a resistor $R_{SET}$, detection circuit 1026 may be adapted to apply a voltage to line 118 and detect the current flowing through resistor $R_{SET}$.

Such a technique is described e.g. in PCT/IB2013/055106 (WO 2014/001987) and DE 102012224349 A1, the contents whereof are included in the present description by way of reference.

For example, Figure 10 shows a possible embodiment of the detection circuit, substantially corresponding to Figure 5 of PCT/IB2013/055106.

In the presently considered embodiment, detection circuit 1126 comprises an operational amplifier OpAmp1, wherein the negative input is connected to communication line 118 (line CL in PCT/IB2013/055106). The output generates a measure signal $V_{REF}$ (voltage Vout in PCT/IB2013/055106) provided at the output of detection circuit 1126. A current measuring resistor Rfb is connected between the output and the negative input of operational amplifier OpAmp1, thus generating the negative feedback thereof. A voltage source $Vk$ is connected between the positive input of operational amplifier OpAmp1 and the ground line GNBD, thus producing the voltage reference for line 118.

Therefore, in the present arrangement operational amplifier OpAmp1 sets voltage $Vk$ on line 118, and the output provides a voltage $V_{REF}$ which is proportional to the current flowing through line 118; in other words, the detection circuit generates a voltage identifying the requested current. Specifically, this voltage $V_{REF}$ is referred to ground GNDB, because the ground of operational amplifier OpAmp1 is (directly) connected to ground GNDB. On the other end, the supply to operational amplifier OpAmp1 may be provided by line 110, or optionally by an additional voltage regulator, e.g. a converter, providing a 12V voltage. The person skilled in the art will appreciate that detection circuit 1126 may comprise further components, e.g. in order to protect the circuit from an overvoltage on line 118, and/or filters adapted to stabilize measure signal $V_{REF}$.

An alternative solution is described in EP 2014/170495 (EP 2 814 302 A1), wherein the ID element is a shunt regulator or a Zener diode limiting the voltage on line 118.

Therefore, in various embodiments, detection circuit 1026 provides a reference signal REF which is indicative of the current requested by lighting module 20.

As previously stated, such a signal is provided to a regulator 1120, which generates an error signal ERR. According to various embodiments, such an error signal ERR is referred to ground GNDB.

Therefore, various embodiments envisage the provision of voltage conversion circuit 1122, which may also be implemented as an optical coupler. However, as previously stated, the voltage between ground GNDB and ground GNDA is substantially constant and corresponds to $V_{in} - V_o$. Therefore an expensive optical coupler is not necessary; on the contrary, a level shifter CC may be used.

The implementation of voltage conversion circuit 1122 depends on the implementation of regulator 1120 and of driver circuit 1124.

First Embodiment

In a first embodiment, regulator 1120 generates an error signal ERR with two possible levels: a first logic level, e.g. "1", indicating that the detected current is not sufficient, and a second level, e.g. "0", indicating that the detected current is sufficient. For example, such a regulator 1120 may be implemented e.g. as a comparator with hysteresis.

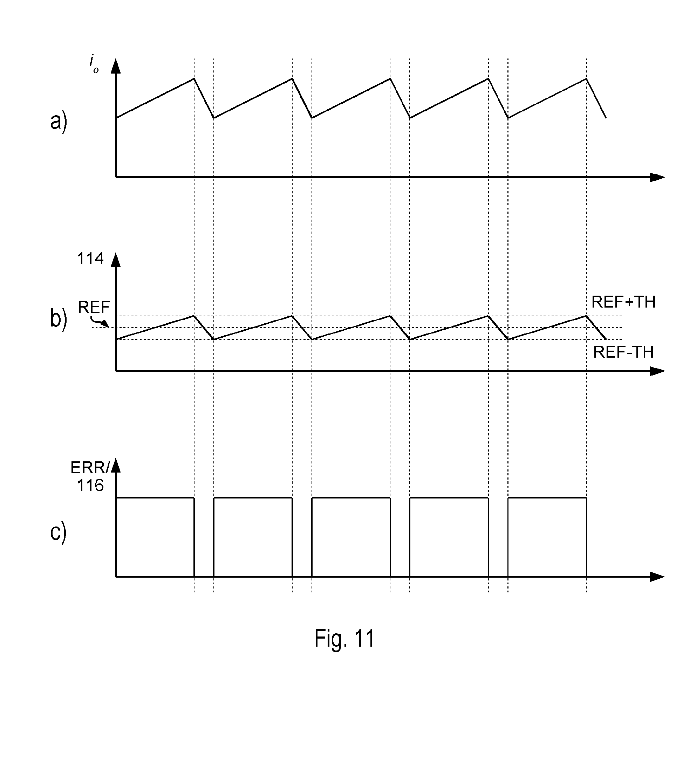

Figure 11 shows a possible embodiment of the behaviour of said regulator 1120.

Specifically, when switch S is off, detected current 114 increases (see Figure 11a). When the detected current 114 reaches an upper threshold (see Figure 11b), e.g. REF + TH, the output of comparator 1120 switches the logic level, e.g. error signal ERR is set to "0". Driver circuit 1124 detects this change and opens switch S (see Figure 11c).

Now the detected current 114 decreases. When the detected current 114 reaches a lower threshold, e.g. REF - TH, the output of comparator 112' switches logic level again. In the presently considered embodiment, driver circuit 1124 detects this change, too, and closes switch S.

As a consequence, in the presently considered embodiment, driver circuit 1124 may also directly transmit the changes in error signal ERR' to switch S. In the simplest situation, driver circuit 1124 may therefore apply error signal ERR' directly to switch S. However, driver circuit 1124 preferably comprises a so-called gate driver, which typically comprises a comparator or a comparator with hysteresis, such as a Schmitt trigger.

Therefore, this embodiment offers the advantage of admitting a less accurate voltage conversion circuit 1122, because it may suffice for the voltage conversion circuit 1122 to be adapted to transmit the information about the level of error signal ERR.

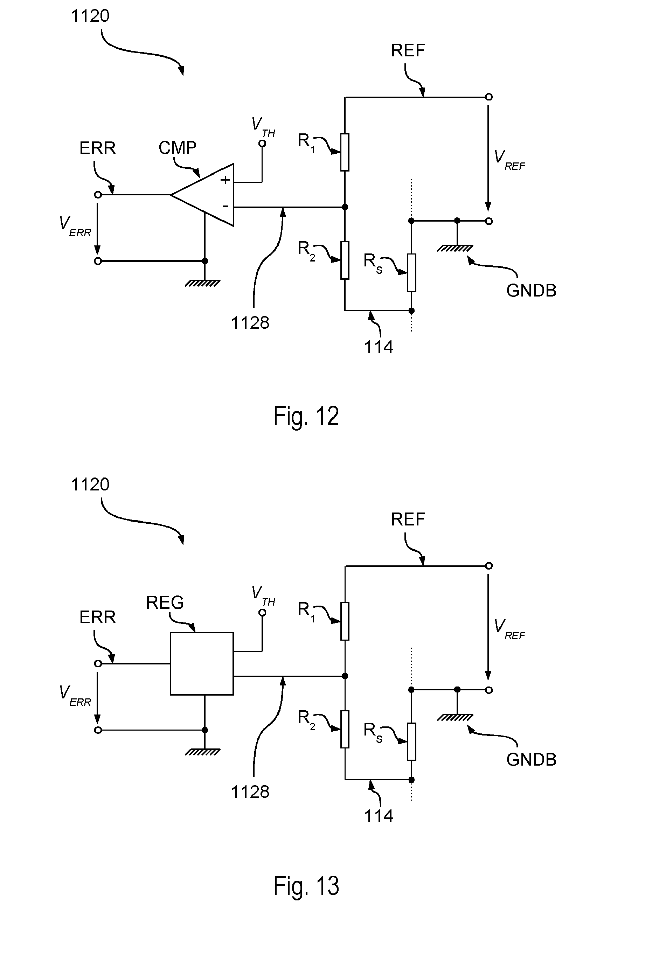

In this situation Figure 12 shows a possible embodiment of regulator 1120.

In the presently considered embodiment, reference voltage $V_{REF}$ is summed to voltage $V_S$ across shunt resistor $R_S$, which however is negative with respect to ground GNDB. The sum of voltages $V_{REF} + V_S$ is applied to a voltage divider comprising two connected resistors $R_1$ and $R_2$ connected in series. Therefore, in the presently considered embodiment, the middle point 1128 of voltage divider $R_1$ and $R_2$ provides a voltage which indicates the difference between the requested current REF and the detected current 114.

In the presently considered embodiments, such voltage at the output 1128 of the voltage divider is compared, via a comparator with hysteresis CMP, with a given threshold voltage $V_{TH}$. Specifically, such a threshold voltage $V_{TH}$ should substantially correspond to the voltage being applied to output 1128 when the detected current 114 corresponds to the requested current REF (irrespective of the actual values of voltages $V_{REF}$ and $V_S$). As a consequence, with an appropriate sizing of resistors $R_1$, $R_2$ and $R_S$ and of voltage $V_{TH}$, the error signal ERR provided by comparator CMP will correspond to what is shown in Figure 11.

However, the inventors have observed that this solution may lead to accuracy issues in the output current, because the shifting of a digital signal adapted to directly control the gate of switch S may involve problems of delay, generated by shifter 1122 on the signal switching fronts.

Second Embodiment

Therefore, in an embodiment, another type of regulator REG is provided in the place of comparator CMP.

For example, Figure 13 shows an embodiment wherein regulator REG is a P regulator, amplifying the difference between reference signal REF and detected current 114.

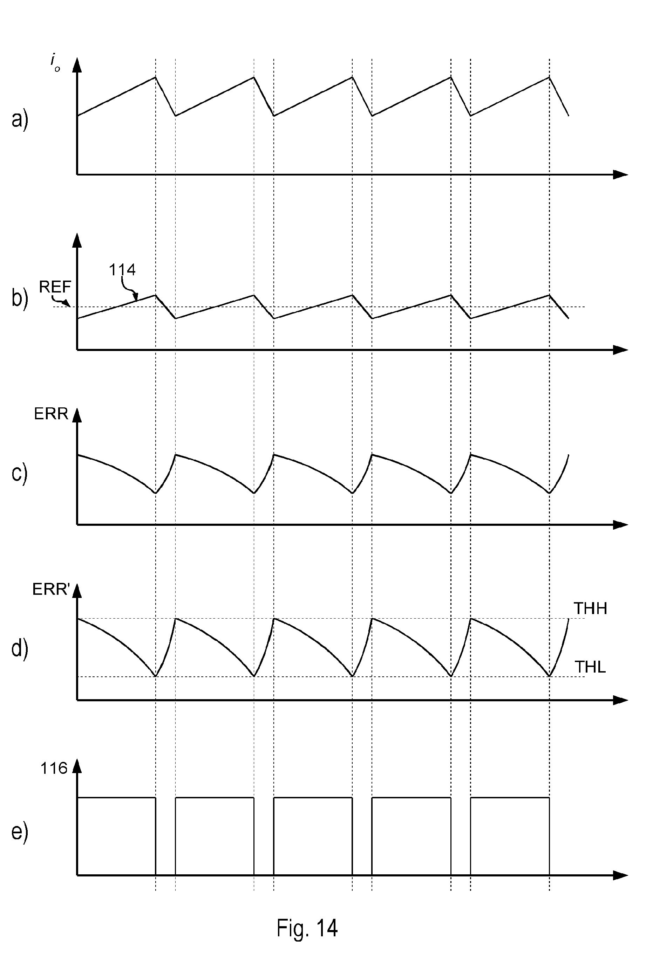

For example, as shown in Figure 14, specifically in Figure 14c, error signal ERR is no longer a binary signal, but a continuous signal indicating the difference between reference signal REF and measured current 114.

This error signal ERR is converted, via voltage conversion circuit 1122, into an error signal ERR' referred to ground GNDA, and driver circuit 1124 drives switch S as a function of error signal ERR'.

For example, in the presently considered embodiment, driver circuit may be a comparator with hysteresis, which compares error signal ERR' with an upper threshold THH and a lower threshold THL. For example, in the presently considered embodiment, when error signal ERR' reaches upper threshold THH, the driver circuit switches signal 116 off and opens switch S, and when error signal ERR' reaches lower threshold THL, the driver circuit switches signal 116 on and closes switch S. As a consequence, in the presently considered embodiment, error signal ERR contains a ripple of the detected current, and this ripple enables to generate drive signal 116 through a comparator with hysteresis and optionally a gate driver.

Therefore, this embodiment has substantially the same performance as the embodiment described with reference to Figure 11, the difference being that the comparator with hysteresis is included in the driver circuit, while regulator 1120 only generates an error signal ERR indicative of the difference between reference signal REF and the detected current 114.

Third Embodiment

In an embodiment, regulator 1120, e.g. regulator REG shown in Figure 13, is a PI (or optionally a PID) regulator, and the driver circuit is implemented in the same way as the second embodiment, as a comparator with hysteresis.

For example, as shown in Figure 15, specifically in Figure 15c, error signal ERR comprises a component $ERR_I$, which thanks to the I portion of the regulator is increased or decreased until the desired current is achieved. Moreover, error signal ERR comprises a component $ERR_P$, which thanks to the P portion of the regulator comprises, as in the previous embodiment, a ripple indicative of the difference between the detected and the requested current. Therefore, this embodiment has a performance substantially corresponding to the previous embodiment, the difference being that the average value $ERR_I$ of the error signal is determined by the I portion of regulator 1120, i.e. regulator 1120 generates an error signal ERR which is increased or decreased until detected current 114 corresponds (in average) to reference value REF.

For example, Figure 16 shows a possible embodiment of such a PI regulator through an operational amplifier OpAmp2.

Specifically, in the presently considered embodiment, the negative input of operational amplifier OpAmp2 is connected, through a resistor $R_{A2}$, to line 1128 identifying the difference between reference signal REF and the detected current. The output generates error signal ERR. A resistor $R_{A1}$ and a capacitor $C_{A1}$ are connected between the output and the negative input of operational amplifier OpAmp2, thus providing the negative feedback thereof. A voltage source $V_{TH}$ is connected to the positive input of operational amplifier OpAmp2, thus providing the reference for the regulator.

Also in this case, error signal ERR is converted, via voltage conversion circuit 1122, into an error signal ERR' referred to ground GNDA, and driver circuit 1124 drives switch S as a function of error signal ERR'.

For example, in the presently considered embodiment, the driver circuit compares error signal ERR' with an upper threshold THH and a lower threshold THL. For example, in the presently considered embodiment, when error signal ERR' reaches upper threshold THH, the driver circuit switches signal 116 off and opens switch S, and when error signal ERR' reaches lower threshold THL, the driver circuit activates signal 116 and closes switch S.

This embodiment offers the advantage that a possible offset introduced by voltage conversion circuit 1122 is automatically compensated for by the I portion of regulator 1120.

Fourth Embodiment

In one embodiment regulator 1120, e.g. regulator REG shown in Figure 13, is an I regulator and driver circuit 1124 is a PWM driver circuit.

Therefore, in the present embodiment regulator 1120 provides an error signal ERR which is increased or decreased until the measured current 114 corresponds in average to reference value REF.

In this case as well, error signal ERR is converted by voltage conversion circuit 1122 into an error signal ERR' referred to ground GNDA, and driver circuit 1124 drives switch S as a function of error signal ERR'.

For example, in an embodiment, driver circuit 1126 receives error signal ERR' and varies the duty cycle of drive signal 116 which drives the switching of switch S as a function of error signal ERR', e.g. it increases the duty cycle when the value of error signal ERR rises.

Fifth Embodiment

In an embodiment regulator 1120, e.g. regulator REG shown in Figure 13, is a P regulator (or preferably a PI or PID regulator), and driver circuit 1124 is a PWM driver circuit with current peak regulation and constant frequency.

Therefore, in this embodiment, error signal ERR may behave as shown in Figure 15c.

In this case, driver circuit PWM 1124 may synchronize error signal ERR' shown in Figure 15d with a fixed-frequency clock signal. For example, in this case, driver circuit may close switch S with fixed frequency, and may open switch S when error signal ERR or shifted error signal ERR' indicates that the measured current 114 has reached a given upper threshold, e.g. when error signal ERR' reaches upper threshold THH.

Implementation of the Voltage Conversion Circuit

As previously described, voltage conversion circuit 1122 converts error signal ERR into a corresponding error signal ERR' referred to ground GNDA. Moreover, such signals are actually only shifted for a substantially constant voltage, and therefore voltage conversion circuit 1122 may be implemented more easily. Generally speaking, the main purpose of circuit 1122 is therefore shifting the reference to a different ground. However, in general terms also a manipulation of the signal width might take place.

Moreover, according to the implementations of regulator 1120 and of driver circuit 1124, error signal ERR may have different characteristics.

For example, in the solutions employing a regulator with I portion (e.g. an I, PI or PID regulator), it is sufficient for voltage conversion circuit 1122 to ensure a proportionality between input signal ERR and output signal ERR'. However, no high accuracy (also as regards offset) or temperature stability are demanded for voltage conversion circuit 1124, because it is sufficient for output signal ERR' to follow only an increase or decrease in the input error signal. For this reason, a substantially linear behaviour between error signal ERR and error signal ERR' may suffice, but it is not necessary to ensure a particular accuracy in level reduction or offset and/or a proportionality between the input signal and the output signal. Indeed, thanks to the closed-loop control, regulator 1120 will increase or decrease error signal ERR until the measured current 114 corresponds to reference signal REF.

On the other hand, a voltage conversion circuit 1122 with higher accuracy would be required if regulator 1120 did not comprise an I portion, e.g. if regulator 1120 were merely a P regulator.

Figure 15 shows a related embodiment of a voltage conversion circuit 1122.

In the considered embodiment, circuit 1122 comprises a current generator 1130, which generates a current $i_c$ as a function of the input voltage, i.e. of error signal ERR referred to ground GNDB.

For example, such a current generator 1130 may be implemented as a resistor $R_3$ and a bipolar pnp transistor Q1. Specifically, in the presently considered embodiment, resistor $R_3$ is connected between the emitter of transistor Q1 and a supply voltage $V_{SUP}$, e.g. 12 V. The base of transistor Q1 is connected to error signal ERR and the collector provides current $i_c$. The person skilled in the art will appreciate that the structure of such a current generator 1130 may also be more complex, and mat comprise one or more current mirrors.

In the presently considered embodiment, circuit 1122 moreover comprises a voltage generator 1132, which again converts current $i_c$ provided by current generator 1130 into a voltage, or generates signal ERR' as a function of current $i_c$.

For example, in the simplest of cases, such a circuit 1132 may be implemented as a resistor $R_4$ connected to ground GNDA. Therefore, in the considered embodiment, the voltage across resistor $R_4$, i.e. signal ERR', is proportional to current $i_c$ provided by generator 1130.

Of course, without prejudice to the underlying principle of the invention, the details and the embodiments may vary, even appreciably, with respect to what has been described by way of non-limiting example only, without departing from the extent of protection of the invention as defined by the annexed claims.

**Claims**

1. Electronic reverse buck converter (12a) comprising:

   - two input terminals (110) for receiving a first power supply signal ($V_{in}$) and two output terminals (106) for providing a second power supply signal (io, $V_o$) ;
   - a diode (D) and an electronic switch (S) connected in series between said two input terminals (110), wherein the cathode of said diode (D) is connected to the first input terminal and said switch (S) is connected between the second input terminal and the anode of said diode, wherein the second input terminal represents a first ground (GNDA);
   - an inductor (L) and said two output terminals (106) connected in series between the cathode and the anode of said diode (D), wherein the first output terminal is connected to the cathode of said diode (D), the inductor (L) is connected to the anode of said diode (D), wherein the second output terminal represents a second ground (GNDB);

   **characterized in that** said electronic converter (12a) comprises further:

   - a shunt resistor ($R_S$) connected between the second output terminal and said inductor (L), wherein the voltage at said shunt resistor ($R_S$) is indicative of the current provided via said two output terminals (106); and
   - a control circuit (112a) comprising:

      a) an error amplifier (1120) configured to generate a first error signal (ERR) as a function of the voltage at said shunt resistor ($R_S$)

and a reference signal (REF) indicative of a requested current, wherein said first error signal (ERR) is referred to said second ground (GNDB);

b) a voltage conversion circuit (1122) configured to receive said first error signal (ERR) and generate a second error signal (ERR') indicative of the value of said first error signal (ERR), wherein said second error signal (ERR') is referred to said first ground (GNDA); and

c) a driver circuit (1124) configured to drive the switching of said electronic switch (S) as a function of said second error signal (ERR').

2. Electronic converter according to Claim 1, wherein said first error signal (ERR) is a binary signal, wherein said error amplifier (1120) is configured to set said first error signal (ERR) to a first logic value when said current provided via said two output terminals (106) should be increased and set said first error signal (ERR) to a second logic value when said current provided via said two output terminals (106) should be decreased.

3. Electronic converter according to Claim 2, wherein said error amplifier (1120) comprises a comparator or a comparator with hysteresis (CMP).

4. Electronic converter according to Claim 1, wherein said error amplifier (1120) is a controller which comprises a P part, such that said first error signal (ERR) comprises a ripple being proportional to the difference between said requested current (REF) and said current provided via said two output terminals (106).

5. Electronic converter according to any of the previous claims, wherein said error amplifier (1120) is a controller which comprises an I part, such that the average value of said first error signal (ERR) increases or decreases until said current provided via said two output terminals (106) corresponds in average to said requested current.

6. Electronic converter according to Claim 4 or Claim 5, and wherein said driver circuit (1124) comprises a comparator with hysteresis.

7. Electronic converter according to Claim 5, wherein said driver circuit (1126) is configured to generate a PWM drive signal (116) for said electronic switch (S), wherein said driver circuit (1126) is configured to determine the duty cycle of said PWM drive signal (116) as a function of said second error signal (ERR').

8. Electronic converter according to Claim 4 or the combination of Claims 4 and 5, wherein said driver circuit (1126) is configured to generate a PWM drive signal (116) for said electronic switch (S), wherein said driver circuit (1126) is configured to set, with constant frequency, said PWM drive signal (116) to a first logic value and set said drive signal PWM (116) to a second logic value when said second error signal (ERR') reaches a predetermined threshold (THH).

9. Electronic converter according to any of the previous claims, wherein said error amplifier (1120) comprises a voltage divider ($R_1$, $R_2$) configured to receiving at input the sum of said reference signal (REF) and said voltage at said shunt resistor ($R_S$) and provide at output (1128) a signal identifying the difference between said requested current (REF) and said current provided via said two output terminals (106).

10. Electronic converter according to any of the previous claims, wherein said voltage conversion circuit (1122) comprises a DC level shifter circuit.

11. Electronic converter according to Claim 10, wherein said voltage conversion circuit (1122) comprises:

- a current generator (1130) configured to generate a current ($i_c$) as a function of said first error signal (ERR); and
- a voltage generator (1132) configured to generate said second error signal (ERR') as a function of said current ($i_c$).

12. Electronic converter according to any of the previous claims, wherein said control circuit (112a) comprises:

d) a detection circuit (1126) connected to a communication line (118) and configured to receiving via said communication line (118) information which identify said requested current and generate said reference signal (REF) as a function of said information received.

13. A method of operating an electronic reverse buck converter (12a) according to any of the previous claims, comprising the steps of:

a) generating a first error signal (ERR) as a function of the voltage at said shunt resistor ($R_S$) and a reference signal (REF) indicative of a requested current, wherein said first error signal (ERR) is referred to said second ground (GNDB);

b) generating a second error signal (ERR') converter of the value of said first error signal (ERR), wherein said second error signal (ERR') is referred to said first ground (GNDA); and

c) driving the switching of said electronic switch (S) as a function of said second error signal (ERR').

Fig. 1

Fig. 2

Fig. 3

a)

b)

Fig. 4

Fig. 5

Fig. 6

Fig. 7

Fig. 8

Fig. 9

Fig. 10

a)

$i_o$

114

b)

REF

REF+TH

REF-TH

ERR/
116

c)

Fig. 11

Fig. 12

Fig. 13

Fig. 14

Fig. 15

Fig. 16

Fig. 17

Europäisches
Patentamt

European
Patent Office

Office européen
des brevets

# EUROPEAN SEARCH REPORT

**Application Number**

EP 16 17 8841

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/213858 A1 (KUROKI YOSHIFUMI [JP] ET AL) 26 August 2010 (2010-08-26) * column 4, line 21 - line 38; figure 5 * * column 8, line 5 - column 9, line 14 * ----- | 1-13 | INV. H02M3/156 H05B33/08 ADD. H02M1/00 |
| X | WO 2013/024393 A1 (ABLE STAR TECHNOLOGY LTD [CN]; HUNG HSIN-LUNG [CN]) 21 February 2013 (2013-02-21) * figure 3 * ----- | 1-13 | |
| X | US 2008/180075 A1 (XIE MANJING [US] ET AL) 31 July 2008 (2008-07-31) * figures 2-10 * ----- | 1-13 | |

TECHNICAL FIELDS
SEARCHED (IPC)

H05B
H02M

The present search report has been drawn up for all claims

| Place of search | Date of completion of the search | Examiner |
|---|---|---|
| The Hague | 11 January 2017 | Segaert, Pascal |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 17 8841

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2017

| Patent document cited in search report | | Publication date | Patent family member(s) | | Publication date |
|---|---|---|---|---|---|
| US 2010213858 | A1 | 26-08-2010 | JP | 5592613 B2 | 17-09-2014 |
| | | | JP | 2010170844 A | 05-08-2010 |
| | | | US | 2010213858 A1 | 26-08-2010 |
| WO 2013024393 | A1 | 21-02-2013 | NONE | | |
| US 2008180075 | A1 | 31-07-2008 | EP | 2123122 A1 | 25-11-2009 |
| | | | US | 2008180075 A1 | 31-07-2008 |
| | | | WO | 2008094232 A1 | 07-08-2008 |

EPO FORM P0459

For more details about this annex : see Official Journal of the European Patent Office, No. 12/82

**EP 3 139 483 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO IB2013055106 W
- WO 2014001987 A
- DE 102012224349 A1
- WO IB2013055106 A
- EP 2014170495 A
- EP 2814302 A1

**Non-patent literature cited in the description**

- NCL30100 - Fixed Off Time Switched Mode LED Driver Controller. *Semiconductor Components Industries, LLC,* 2011